# EUROPÄISCHE PATENTANMELDUNG

(11) **EP 1 281 471 A1**
(43) Veröffentlichungstag der Anmeldung: **05.02.2003**
(21) Anmeldenummer: 02013135.5
(22) Anmeldetag: 01.07.2002
(51) Int. Cl.: B23P 21/00, B62D 65/00, B23K 37/047, B25J 15/00

(54) **Bauteilfügeanlage und Verfahren zum Fügen von Bauteilen**

(30) Priorität: 04.07.2001 AT 10382001
(71) Anmelder: TMS Produktionssysteme GmbH & Co., A-4031 Linz (AT)
(72) Erfinder: Kühas, Thomas, Dipl.-Ing., 4222 Luftenberg (AT)
(74) Vertreter: VA TECH Patente GmbH & Co

(57) **Zusammenfassung**

In Bauteilfügeanlagen werden im Regelfall Bauteile zugeführt, positioniert, gespannt und im Anschluss gefügt, wobei zuerst kleine Bauteilgruppen hergestellt werden, die zu größeren Gruppen gefügt werden, solange bis die erwünschte Konstruktion, wie z.B. eine Fahrzeugkarosserie, fertiggestellt ist. Diese Produktionskette erfordert eine Vielzahl von hintereinanderfolgenden Bauteilfügeanlagen, die eine große Fläche in Anspruch nehmen und daher sehr kostenintensiv ist. Diese Produktion soll weiters aus wirtschaftlichen Gründen mit einer hohen Taktzeit erfolgen. Die vorliegende Erfindung zeigt nun eine Vorrichtung und eine Verfahren, mit der einerseits die Taktzeit verbessert und gleichzeitig der erforderliche Flächenbedarf verringert werden kann.

## Beschreibung

Die vorliegende Erfindung betrifft eine Bauteilfügeanlage bestehend aus einer Fügestation zum Fügen von Bauteilen und/oder Bauteilgruppen und mindestens einer Bauteilzuführvorrichtung, mit zumindest einer Spann- und Positioniereinrichtung zum Aufnehmen, Positionieren und Spannen von zumindest zwei Bauteilen, mittels der, Bauteile oder Bauteilgruppen in die Fügestation transportierbar sind und in die zumindest eine Fügeeinrichtung integriert ist, sowie ein zugehöriges Verfahren zum Fügen von Bauteilen und/oder Bauteilgruppen in einer Bauteilfügeanlage.

Fügeanlagen, wie beispielsweise Karosseriefügeanlagen und dabei hauptsächlich Karosserieschweißanlagen, sind in einer Vielzahl von Ausführungsvarianten bekannt. Gemeinsam ist allen Anlagen, dass die Taktzeit einer solchen Anlage so weit wie möglich reduziert werden soll, um die Anzahl an produzierbaren Bauteilen, wie Karosserien, pro Zeiteinheit zu erhöhen. Ein anderer wichtiger Ansatzpunkt für Verbesserungen solcher Anlagen ist, den benötigten Platzbedarf so weit wie möglich einzuschränken, um die Kosten weitestmöglich zu senken.
Dazu wurden unter anderem effektive Spannrahmenwechselsysteme entwickelt, wie zum Beispiel in der EP 909 603 A1 offenbart, die sowohl die Taktzeit erhöhen als auch den Platzbedarf verringern. Bei anderen Anlagen ging man dazu über, die notwendigen Arbeitsschritte, wie Positionieren, Spannen und Fügen der Bauteile, so weit wie möglich in einer Vorrichtung zu integrieren. Beispielsweise zeigt die EP 440 001 A1 eine Karosserieschweißanlage, die im Spannrahmen selbst eine Positionier-, Spann- und eine Laserschweißeinrichtung, integriert.

Die vorliegende Erfindung stellt sich daher die Aufgabe, eine Bauteilfügeanlage anzugeben, mit der die Taktzeit verringert und optimiert werden kann und gleichzeitig der notwendige Flächenbedarf verkleinert wird.

Diese Aufgabe wird für die Vorrichtung erfindungsgemäß dadurch gelöst, dass mittels der Fügeeinrichtung die in der Bauteilzuführvorrichtung gespannten Bauteile vor und/oder während des Transportes der Bauteilzuführvorrichtung in die Fügestation zu einer Bauteilgruppe fügbar sind. Das Verfahren löst die Aufgabe, indem die Bauteile mittels einer in die Bauteilzuführvorrichtung integrierten Fügeeinrichtung vor und/oder während die Bauteilzuführvorrichtung in die Fügestation transportiert wird, zu einer Bauteilgruppe gefügt werden.
Die Zeit des Transportes der Bauteile in die Fügestation, die bei herkömmlichen Anlagen eine reine Totzeit ist und nicht produktiv genutzt wird, wird nun erstmals dazu verwendet, Bauteile während des Transportes zu Bauteilgruppen zu fügen. Dabei können kleine Bauteilgruppen hergestellt werden, die ansonsten in eigenen aufwendigen und teuren Fügestationen hergestellt werden müssten, was die Taktzeit einer solchen Anlage wesentlich verbessert.
Weiters ergibt sich eine erhebliche Platzeinsparung, da ganze Fügestationen zur Herstellung der Bauteilgruppen überflüssig werden. Es werden kleinere Bauteilgruppen und nicht einzelne Bauteile in die Fügestationen zugeführt, wodurch die fertige Konstruktion, wie z.B. eine Fahrzeugkarosserie, mit weniger Fügestationen in weniger Arbeitsschritten, und daher auch wesentlich schneller, hergestellt werden kann.
Diese Vorteile resultieren auch in einen beträchtlichen Kostenvorteil gegenüber anderen bekannten Anlagen.

Die während des Transportes gefügten Bauteilgruppe werden daraufhin vorteilhaft in der Fügestation mit oder ohne Bauteilzuführvorrichtung positioniert und gespannt und diese Bauteilgruppe in der Fügestation mit zumindest einer weiteren Bauteilgruppe und/oder einem weiterem Bauteil gefügt. Dadurch lassen sich die vorgefügte Bauteilgruppen mit wenigen Schritten zur Gesamtkonstruktion zusammenfügen, ohne an Taktzeit einzubüßen. Gleichzeitig kann dadurch erheblich an Flächenbedarf eingespart werden.

Eine große Vereinfachung und Erhöhung der Effektivität ergibt sich, wenn der Spannvorgang in der Fügestation zumindest teilweise mit den Spanneinrichtungen der Bauteilzuführvorrichtung und/oder der Fügevorgang in der Fügestation zumindest teilweise mit den Fügeeinrichtungen der Bauteilzuführvorrichtung durchführbar ist. Damit kann die Spanneinrichtung bzw. die Fügeeinrichtung der Bauteilzuführvorrichtung mehrmals für unterschiedliche Spann- bzw. Fügeaufgaben verwendet werden, wodurch Spann- bzw. Fügeeinrichtungen in der Fügestation selbst eingespart werden können. Dadurch kann die Fügestation kompakter und kleiner und somit auch günstiger ausgeführt werden.

Eine weitere Vereinfachung kann erreicht werden, indem zumindest eine Bauteilzuführvorrichtung als Bauteilgreifer eines Roboters ausgebildet ist, mit dem ein Bauteil selbsttätig aufnehmbar ist und die Bauteilzuführvorrichtung mit dem Bauteil mittels des Roboters in die Fügestation transportierbar ist, da dann keine eigene aufwendige Vorrichtung zum Zuführen der Bauteile in die Fügestation vorgesehen werden muss, was sich wiederum positiv auf den erforderlichen Platzbedarf und die Kosten auswirkt.
Alternativ oder zusätzlich dazu kann vorgesehen sein, zumindest ein Bauteil von extern mittels einer Zuführvorrichtung der Bauteilzuführvorrichtung zuzuführen.

Eine ganz besonders vorteilhafte Ausführungsvariante ergibt sich, wenn zumindest eine Bauteilzuführvorrichtung ein Spannrahmen ist der mittels einer Spannrahmenzuführvorrichtung in die Fügestation transportierbar ist. Das erfindungsgemäße Grundprinzip kann somit mittels einfachen Adaptionen auf bereits bestehende Spannrahmenwechselsysteme angewendet werden, wodurch auch bei diesen Anlagen die Produktivität weiter gesteigert werden kann.

Eine konstruktiv einfache Ausführung kann erzielt werden, indem die Bauteilzuführeinrichtung mit einer zentralen Energieversorgungseinrichtung ausgestattet ist, mit der die Spann-, Positionier- und/oder Fügeeinrichtungen mit der notwendigen Energie und/oder notwendigen Medien versorgbar sind.
Eine weitere Vereinfachung der Energieversorgung ergibt sich dadurch, dass die Spann-, Positionier- und/oder Fügeeinrichtungen durch den Roboter bzw. der Spannrahmenzuführvorrichtung selbst versorgt werden.

Ganz besonders vorteilhaft wird als Fügeeinrichtung eine Schweißeinrichtung, insbesondere eine Laserschweiß-, Plasmaschweiß- oder Widerstandspunktschweißeinrichtung, verwendet, da diese sehr kompakt ausgeführt werden können und daher sehr einfach in die Bauteilzuführeinrichtung integriert werden können, ohne dass die Bauteilzuführeinrichtung zu unhandlich wird. Damit lassen sich sehr günstig Schweißpunkte und/oder Schweißsteps schweißen, wodurch die Bauteile einfach auf Geometrie geschweißt werden können.
Als eine Alternative zum Schweißen kann auch eine Stanznieteinrichtung vorgesehen sein, je nachdem welches Verfahren für welche Anwendung besser geeignet ist.

Eine sehr vorteilhafte Verwendung der erfindungsgemäßen Bauteilfügeanlage findet sich bei einer Karosseriefügeanlage bestehend aus zumindest einer Bauteilfügeanlage und mehreren Bauteilzuführvorrichtungen, wobei für jeden zu fügenden Karosserietyp zumindest eine Bauteilzuführvorrichtung vorgesehen ist und in der Fahrzeugkarosserien geschweißt werden.

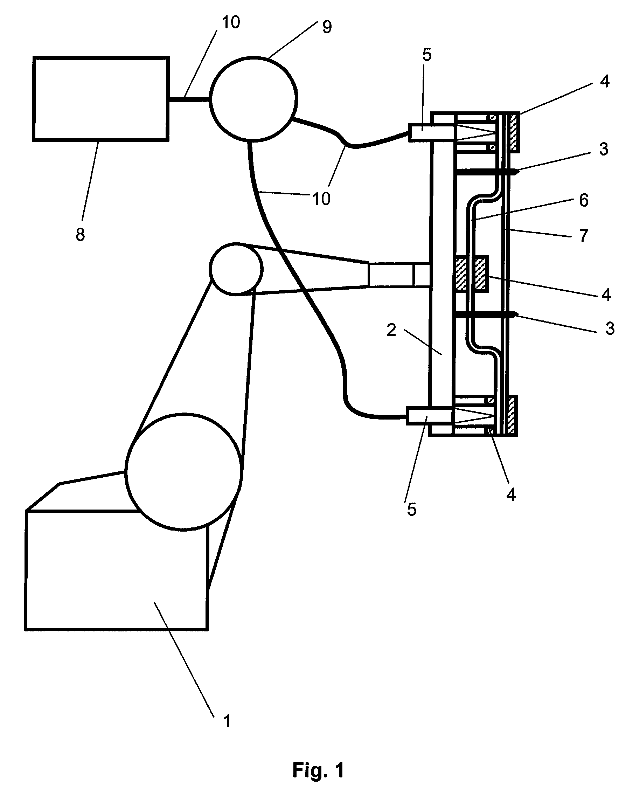

Die Erfindung wird anhand der beispielhaften, nicht einschränkenden, schematischen Figur 1, die ein spezielles Ausführungsbeispiel der Erfindung zeigt, beschrieben.

Das Ausführungsbeispiel nach Figur 1 beschreibt als eine mögliche Variante einer erfindungsgemäßen Bauteilfügeanlage eine Karosserieschweißanlage mit einem Bauteilgreifer 2 als Bauteilzuführvorrichtung, der auf einem Roboter 1 befestigt ist, und einer Laserschweißeinrichtung 5 als Fügeeinrichtung.
Am Bauteilgreifer 2 sind Spanneinrichtungen 4 und Positioniereinrichtungen 3, beispielsweise wie hier Zentrierstifte, angeordnet. Die Spanneinrichtungen 4 und eventuell auch die Positioniereinrichtungen 3 können dabei beliebig betätigt werden, z.B. hydraulisch, pneumatisch, mechanisch oder elektrisch. Ein Bauteil 6, hier ein Karosserieteil, wird nun vom Bauteilgreifer 2 aufgenommen, wobei dieser Vorgang selbsttätig durch den Bauteilgreifer 2 und dem Roboter 1 erfolgen kann, oder indem der Bauteil 6 von extern, z.B. mittels eines anderen Roboters oder einer ähnlichen Einrichtung, zugeführt wird, durch die Positioniereinrichtungen 3 gleichzeitig beim Aufnehmen in die richtige Position gebracht und anschließend durch die Spanneinrichtungen 4 gespannt. Dieser Vorgang wiederholt sich, bis alle Bauteile zugeführt, positioniert und gespannt sind. In diesem Beispiel werden zwei Bauteile 6, 7 aufgenommen und gespannt. Natürlich können auch alle Bauteile zuerst zugeführt und positioniert werden und erst im Anschluss daran gemeinsam gespannt werden.
Nach dem Spannen wird der Bauteilgreifer 2 durch den Roboter 1 in die nicht dargestellt Fügestation transportiert. Um diese Transportzeit zu nutzen, sind im Bauteilgreifer 2 Laserschweißeinrichtungen 5 integriert, mittels denen die Bauteile 6, 7 auf Geometrie verschweißt werden, während der Bauteilgreifer 2 verfahren wird. Dabei können Schweißpunkte oder auch Schweißsteps in der Länge von einigen Zentimetern geschweißt werden. Hier kann natürlich auch jedes andere geeignete Fügeverfahren, wie beispielsweise das Plasmaschweißen, das Widerstandspunktschweißen oder das Stanznieten, zum Einsatz kommen, ohne den allgemeinen Erfindungsgedanken zu verlassen.
Die Bauteile 6, 7 können natürlich aus allen geeigneten Materialen, vorzugsweise Bleche, verzinkte Bleche, oder Aluminium, sein und eine beliebige Form aufweisen.
Die so zu einer Bauteilgruppe verschweißten Bauteile 6, 7 werden, mit oder ohne Bauteilgreifer 2, in der Fügestation wiederum positioniert und gespannt und mit anderen Bauteilen oder Bauteilgruppen verschweißt, oder anderweitig miteinander verbunden. Gleichzeitig, oder zu einem späterem Zeitpunkt, kann bei Bedarf die vorhin auf Geometrie geschweißte Bauteilgruppe in der Fügestation auch ausgeschweißt werden.
Die Laserschweißeinrichtungen 5 werden hier durch eine Laserstrahlquelle 8 und Lichtwellenleiter 10 mit Energie versorgt, wobei der Laserstrahl mit einem Multiplexer 9, der auch in der Laserstrahlquelle 8 integriert sein kann, an die Laserschweißeinrichtungen 5 verteilt wird.
Die Energieversorgung erfolgt über eine nicht dargestellte zentrale Energiekupplung am Bauteilgreifer 2, die auch die Lichtwellenleiter 10 umfassen kann, über die der Bauteilgreifer 2 mit der zum Betrieb erforderlichen Energie versorgt wird. Die Energieversorgung kann beispielsweise auch durch den Roboter 1 selbst erfolgen, wodurch keine zusätzlichen externen Energiequellen benötigt werden.

Dieses oben beschriebene Ausführungsbeispiels ist natürlich nicht einschränkend. Insbesondere kann die erfindungsgemäße Grundidee, nämlich das Fügen von Bauteilen während diese mit der Bauteilzuführvorrichtung in eine Fügestation transportiert werden, um dort zu größeren Gruppen verbunden zu werden, auf beliebige andere Ausführungsvarianten, Bauteilzuführvorrichtung und Bauteilfügeanlagen äquivalent angewendet werden. Beispielsweise kann die erfindungsgemäße Bauteilzuführvorrichtung auch ein Spannrahmen in einer Karosserieschweißstation, der Art wie z.B. in der EP 903 197 A1 offenbart, sein. Dabei würden die im Spannrahmen positionierten und gespannten Bauteile gefügt werden, während der Spannrahmen in die Schweißstation transportiert wird. Dazu sind am Spannrahmen entsprechende Fügeeinrichtungen, wie z.B. eine Plasmaschweißeinrichtung, vorzusehen.

## Patentansprüche

1. Bauteilfügeanlage bestehend aus einer Fügestation zum Fügen von Bauteilen und/oder Bauteilgruppen und mindestens einer Bauteilzuführvorrichtung, mit zumindest einer Spann- und Positioniereinrichtung zum Aufnehmen, Positionieren und Spannen von zumindest zwei Bauteilen, mittels der, Bauteile oder Bauteilgruppen in die Fügestation transportierbar sind und in die zumindest eine Fügeeinrichtung integriert ist, **dadurch gekennzeichnet, dass** mittels der Fügeeinrichtung die in der Bauteilzuführvorrichtung gespannten Bauteile vor und/oder während des Transportes der Bauteilzuführvorrichtung in die Fügestation zu einer Bauteilgruppe fügbar sind.

2. Bauteilfügeanlage nach Anspruch 1, **dadurch gekennzeichnet, dass** die gefügte Bauteilgruppe in der Fügestation mit oder ohne Bauteilzuführvorrichtung positionierbar und spannbar ist und dass diese Bauteilgruppe in der Fügestation mit zumindest einer weiteren Bauteilgruppe und/oder einem weiterem Bauteil fügbar ist.

3. Bauteilfügeanlage nach Anspruch 2, **dadurch gekennzeichnet, dass** der Spannvorgang in der Fügestation zumindest teilweise mit den Spanneinrichtungen der Bauteilzuführvorrichtung durchführbar ist.

4. Bauteilfügeanlage nach Anspruch 2 oder 3, **dadurch gekennzeichnet, dass** der Fügevorgang in der Fügestation zumindest teilweise mit den Fügeeinrichtungen der Bauteilzuführvorrichtung durchführbar ist.

5. Bauteilfügeanlage nach einem der Ansprüche 1 bis 4, **dadurch gekennzeichnet, dass** zumindest eine Bauteilzuführvorrichtung ein Bauteilgreifer eines Roboters ist, mit dem zumindest ein Bauteil selbsttätig aufnehmbar ist und die Bauteilzuführvorrichtung mit dem Bauteil mittels des Roboters in die Fügestation transportierbar ist.

6. Bauteilfügeanlage nach einem der Ansprüche 1 bis 5, **dadurch gekennzeichnet, dass** zumindest ein Bauteil von extern mittels einer Zuführvorrichtung der Bauteilzuführvorrichtung zuführbar ist.

7. Bauteilfügeanlage nach einem der Ansprüche 1 bis 6, **dadurch gekennzeichnet, dass** zumindest eine Bauteilzuführvorrichtung ein Spannrahmen ist der mittels einer Spannrahmenzuführvorrichtung in die Fügestation transportierbar ist.

8. Bauteilfügeanlage nach einem der Ansprüche 1 bis 7, **dadurch gekennzeichnet, dass** die Bauteilzuführeinrichtung mit einer zentralen Energieversorgungseinrichtung ausgestattet ist, mit der die Spann-, Positionier- und/oder Fügeeinrichtungen mit der notwendigen Energie und/oder notwendigen Medien versorgbar sind.

9. Bauteilfügeanlage nach Anspruch 8, **dadurch gekennzeichnet, dass** die Spann-, Positionier- und/oder Fügeeinrichtungen durch den Roboter bzw. der Spannrahmenzuführvorrichtung selbst versorgbar sind.

10. Bauteilfügeanlage nach einem der Ansprüche 1 bis 9, **dadurch gekennzeichnet, dass** zumindest eine Fügeeinrichtung eine Schweißeinrichtung, insbesondere eine Laserschweiß-, Plasmaschweiß- oder Widerstandspunktschweißeinrichtung, ist.

11. Bauteilfügeanlage nach Anspruch 10, **dadurch gekennzeichnet, dass** mit der Schweißeinrichtung Schweißpunkte und/oder Schweißsteps schweißbar sind.

12. Bauteilfügeanlage nach einem der Ansprüche 1 bis 11, **dadurch gekennzeichnet, dass** zumindest eine Fügeeinrichtung eine Stanznieteinrichtung ist.

13. Verwendung der Bauteilfügeanlage nach einem der Ansprüche 1 bis 12 in einer Karosseriefügeanlage bestehend aus zumindest einer Bauteilfügeanlage und mehreren Bauteilzuführvorrichtungen, wobei für jeden zu fügenden Karosserietyp zumindest eine Bauteilzuführvorrichtung vorgesehen ist.

14. Karosseriefügeanlage nach Anspruch 13, **dadurch gekennzeichnet, dass** in der Karosseriefügeanlage Fahrzeugkarosserien schweißbar sind.

15. Verfahren zum Fügen von Bauteilen und/oder Bauteilgruppen in einer Bauteilfügeanlage, bei dem zumindest zwei Bauteile in einer Bauteilzuführvorrichtung aufgenommen, positioniert und gespannt werden und mit dieser Bauteilzuführvorrichtung in eine Fügestation transportiert werden, **dadurch gekennzeichnet, dass** die Bauteile mittels einer in die Bauteilzuführvorrichtung integrierten Fügeeinrichtung, vor und/oder während die Bauteilzuführvorrichtung in die Fügestation transportiert wird, zu einer Bauteilgruppe gefügt werden.

16. Verfahren nach Anspruch 15, **dadurch gekennzeichnet, dass** die gefügte Bauteilgruppe in der Fügestation mit oder ohne Bauteilzuführvorrichtung positioniert und gespannt wird und in der Fügestation mit zumindest einer weiteren Bauteilgruppe und/oder einem weiteren Bauteil gefügt wird.

17. Verfahren nach Anspruch 16, **dadurch gekennzeichnet, dass** die weiteren Bauteilgruppen und/oder weiteren Bauteile in der Fügestation zumindest teilweise mit der in der Bauteilzuführvorrichtung integrierten Spanneinrichtung gespannt wird.

18. Verfahren nach Anspruch 16 oder 17, **dadurch gekennzeichnet, dass** die weiteren Bauteilgruppen und/oder weiteren Bauteile in der Fügestation zumindest teilweise mit der in der Bauteilzuführvorrichtung integrierten Fügeeinrichtung gefügt wird.

19. Verfahren nach einem der Ansprüche 15 bis 18, **dadurch gekennzeichnet, dass** zumindest ein Bauteil von der Bauteilzuführvorrichtung selbsttätig aufgenommen wird.

20. Verfahren nach einem der Ansprüche 15 bis 19, **dadurch gekennzeichnet, dass** zumindest ein Bauteil von extern in die Bauteilzuführvorrichtung zugeführt wird.

21. Verfahren nach einem der Ansprüche 15 bis 20, **dadurch gekennzeichnet, dass** die Bauteile verschweißt werden, vorzugsweise mit dem Laserschweiß-, Plasmaschweiß- oder Widerstandspunktschweißverfahren.

22. Verfahren nach einem der Ansprüche 15 bis 21, **dadurch gekennzeichnet, dass** die Bauteile genietet werden, vorzugsweise mit dem Stanznietverfahren.
